Europäisches Patentamt

European Patent Office

Office européen des brevets

(19)

(11) Publication number: **0 088 786**
**B1**

(12) **EUROPEAN PATENT SPECIFICATION**

(45) Date of publication of patent specification: **27.11.85**

(21) Application number: **82902873.7**

(22) Date of filing: **30.08.82**

(86) International application number:
**PCT/US82/01172**

(87) International publication number:
**WO 83/01169 31.03.83 Gazette 83/08**

(51) Int. Cl.⁴: **H 04 M 11/00**

(54) **METHOD AND ARRANGEMENT FOR SIGNALING THE TRANSMISSION MODE OF A COMMUNICATION SYSTEM.**

(30) Priority: **24.09.81 US 305124**

(43) Date of publication of application:
**21.09.83 Bulletin 83/38**

(45) Publication of the grant of the patent:
**27.11.85 Bulletin 85/48**

(84) Designated Contracting States:
**BE DE FR NL SE**

(56) References cited:
**SU-A- 440 805**
**US-A-3 908 086**
**US-A-4 009 342**
**US-A-4 246 442**
**US-A-4 321 429**
**US-A-4 366 347**

(73) Proprietor: **Western Electric Company, Incorporated**
**222 Broadway**
**New York, NY 10038 (US)**

(72) Inventor: **VAN BOSSE, John Gerrit**
**1308 Royal St. George**
**Naperville, IL 60540 (US)**

(74) Representative: **Weitzel, David Stanley et al**
**Western Electric Company Limited 5,**
**Mornington Road**
**Woodford Green Essex IG8 0TU (GB)**

Courier Press, Leamington Spa, England.

## Description

Technical field

This invention relates to signalling arrangements and more particularly to a method and apparatus for identifying the mode of transmission of information through a communication system.

Background of the invention

The increasing need for data communication services is being accommodated today by providing separate data service facilities or by integrating digital (data) communication services with analog (voice) communication services in existing networks. Typically, when both analog and digital communication capabilities are provided in an existing system, a modem is utilized to convert digital signals into analog form so that equipment modifications are not required at the switching and control centre (central office). However, when transmission between terminals in communication is entirely in digital form, substantial network modification is required. Additionally, if the system permits a choice between analogue and digital format, the user must have the capacity to signal the operating mode of the system to the central office.

In one prior art arrangement, the user signals changes in the system's operating mode to the central office by transmitting special codes and awaiting a confirmation. In this arrangement, such control signalling may be in analogue or digital form. When analogue control signals are used, an analogue receiver is required at the local office. Similarly, if digital control signals are transmitted, a digital receiver is required at the local office. Both analogue and digital control signalling arrangements use the same transmission path as that used for the transmission of analogue or digital information. To prevent interference, control signalling is conducted only when no information is being transmitted. Consequently, the memory which stores the system operating mode must be accessed each time the operating mode is required by the telephone network. Such control signalling arrangements result in additional complexity in the system circuitry.

A communication system which is operable in both digital and analogue (voice) modes is described in US—A—4 009 342.

Disclosure of invention

The method and apparatus for signalling the operating mode in accordance with the invention utilizes direct current (dc) control signalling over the line (path connecting the calling or called party to the local central office) to permit continuous control signalling of the analogue or digital operating mode of the line and of the on-hook or off-hook status of the line terminal.

The presence of direct current in the line indicates an off-hook (active) condition at the line terminal, while the direction of current flow indicates the operating mode of the line. A current flow in one direction signals operation in the analogue mode while a current flow in the opposite direction signals operation in the digital mode. A change in the operating mode is signalled by interrupting current flow at the terminal. The resulting interruption of current flow is detected at the central office which responds by reversing the polarity of the current source. The reappearance of direct current in the line distinguishes a change in operating mode from a call termination or inactive (on-hook) condition.

This arrangement is utilized as part of an alternate analogue digital system where an active call can be switched between analogue and digital operating modes at the terminal. In such a system, a calling terminal transmits an access code and the designation of the called terminal. The access code distinguishes a voice (analogue) only call from an alternate analogue or digital call.

The initial connection between the calling and called parties is established in the analogue mode. Once the connection is established, either calling or called terminal can change the direction of current flow to the central office to initiate a change from the analogue mode to the digital mode and vice versa.

Timing circuits at the central office distinguish inadvertent dc interruptions from valid operating mode changes. The central office responds to the latter by reversing the polarity of the current source. If current flow in the line does not resume within a predetermined time period, the central office interprets this condition to be an on-hook condition rather than a request to change from an analogue to a digital operating mode. If a valid digital mode is established, the central office makes appropriate network changes to facilitate digital transmission between the interconnected terminals.

At the conclusion of analogue and digital transmission, either of the terminals can go on-hook, thus interrupting the dc flow and causing the central office to release the established connection.

Brief description of drawings

Fig. 1 shows a circuit diagram of the line terminal embodying the invention.

Fig. 2 shows a circuit diagram of the central office apparatus of the invention.

Fig. 3 shows the association of Fig. 1 and Fig. 2.

Fig. 4 shows a typical local call connection path.

Fig. 5 shows the signalling format.

Best mode of carrying out the invention

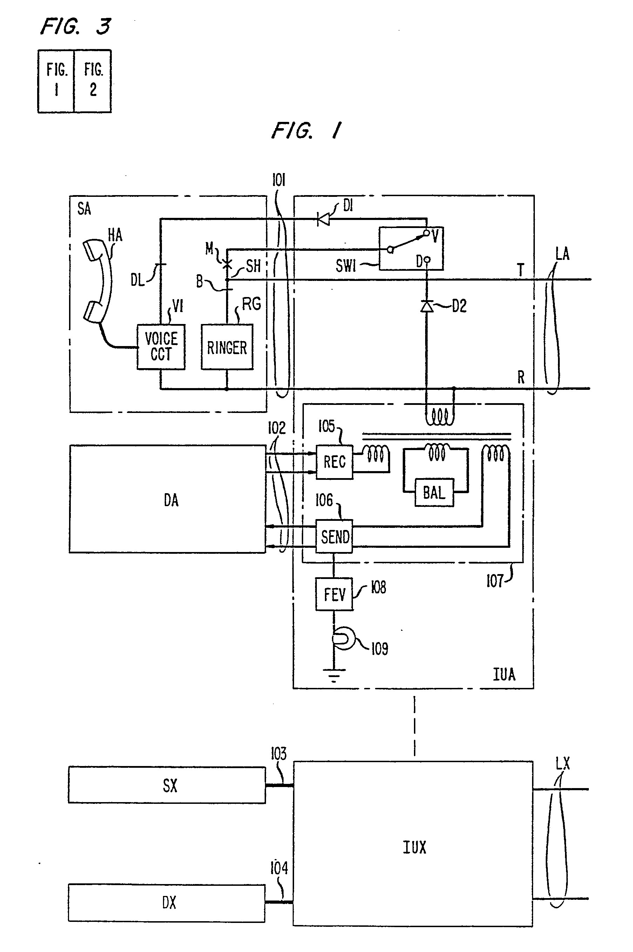

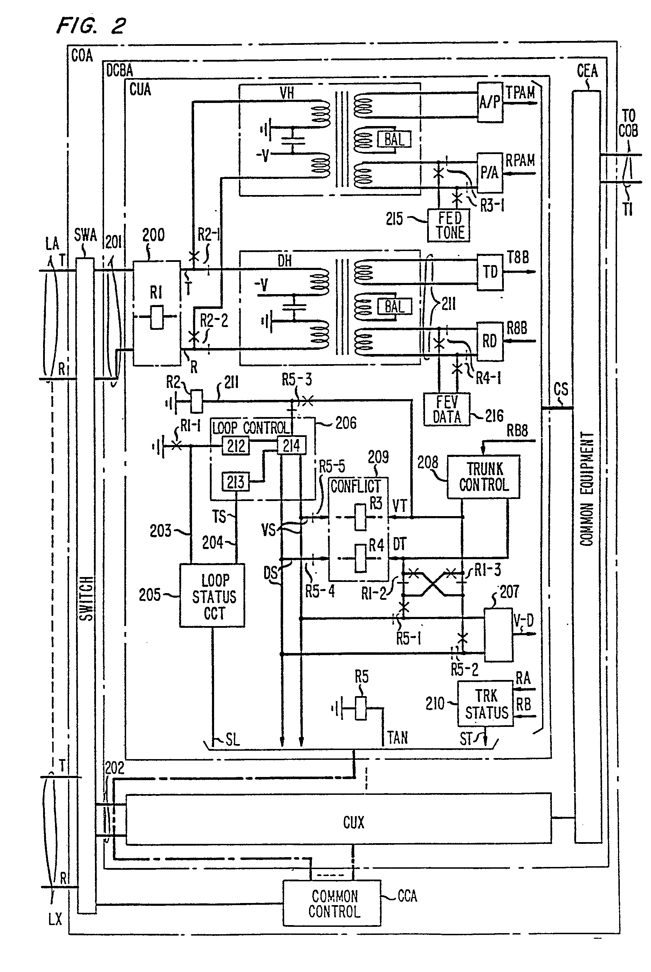

Fig. 1 depicts line terminal apparatus, including telephone set SA and data set DA, connected to interface unit IUA via cables 101 and 102 respectively. Similarly, telephone set SX and data set DX are connected to interface unit IUA via cables 103 and 104 respectively. Interface units IUA and IUX are connected to central office COA (Fig. 2) via line loops LA and LX, respectively.

Interface unit IUA includes switch SW1 for coupling the line loop to the terminal equipment via diodes D1 or D2 which serve to signal operation in the analogue or digital mode. Diode D1 signals the analogue mode to central office COA by enabling current flow from tip lead T to ring lead R of line LA. Diode D2 signals the digital mode to central office COA by enabling current flow from ring lead R to tip lead T.

Fig. 2 depicts central office COA comprising channel units CUA and CUX in digital channel bank DCBA and switch SWA which may be any type of central office switch that transmits direct current. Only the central office operations required for an understanding of the invention will be discussed. Common control CCA enables switch SWA, in a well-known manner, to provide a communication connection between loops LA and LX and channel units CUA and CUX.

Channel units CUA and CUX convert the analogue or digital signals from the active terminals into a digital format for transmission to other central offices via interoffice trunk T1. Common equipment CEA of channel bank DCBA multiplexes the signals from channel units CUA and CUX onto trunk T1.

Channel unit CUA is disclosed in detail and includes an analogue hybrid VH which establishes, during operation in the analogue mode, current flow from the T lead to the R lead in line LA. Also included is digital hybrid DH which establishes, during the digital mode, a direction of current flow from R to T over line LA. Relay R1 detects interruption of line current. Relay R2 provides a means for switching between analogue hybrid VH and digital hybrid DH in response to a current interruption signal from relay R1. Line loop status circuit 205 is responsive to a predetermined interruption of line current to cause a termination of the active voice or data mode by signalling common control CCA.

Common control unit CCA may be a separate computer controller operating under program control or part of the controller for either switch SWA or digital channel bank DCBA. It controls channel units CUA and CUX, common equipment CEA, and switch SWA to process the various call connections through central office COA.

A connection is established in the analogue mode in the following manner, referring again to Fig. 1. Assuming that telephone SA is inactive, i.e., on-hook, no current flows over the tip T and ring R leads of line LA. A call is initiated when telephone SA is activated, i.e., goes off-hook. The on-hook to off-hook transition occurs only during the analogue mode, since the act of going off-hook or a terminal controlled switching operation presets switch SW1 to analogue mode position V. Thus with telephone SA off-hook, direct current is provided by central office COA, over tip lead T, through the make contact M of the switch hook, switch SW1, diode D1, dial contact DL, voice circuit V1 and back to central office COA via ring lead R.

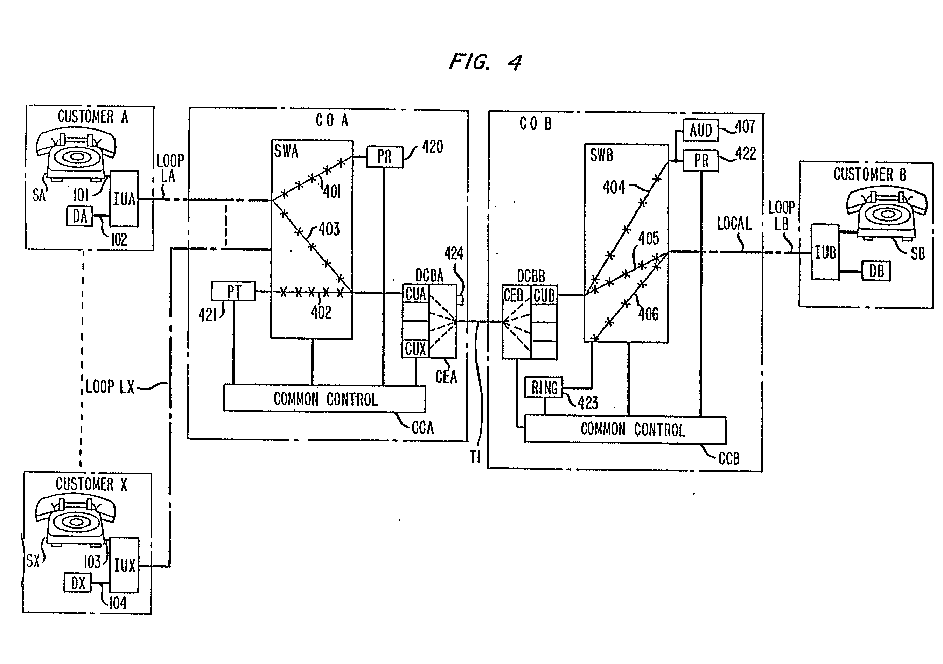

Referring to Fig. 4, when central office COA detects current flow from the T to R leads, it performs the well-known normal line loop tests (power cross, etc.) and establishes a path 401 through switch SWA between customer A and receiver 420 which provides dial tone to customer A. These operations are the standard well-known functions performed at central office locations.

When dial tone is received, customer A dials the alternate voice or digital data access code to indicate to central office COA that analogue or digital information will be sent over line loop LA. Thereafter, customer A dials the telephone number of customer B located at a second central office COB. When customer A has completed dialling, common control CCA of central office COA seizes a channel unit COA of outgoing trunk T1 to central office COB. Common control CCA then establishes connection 402 between digit transmitter 421 and channel unit CUA.

Central office COB detects the trunk seizure and sets up connection 404 to a digit receiver 422. Digit transmitter 421 of central office COA then sends dialed digits to receiver 422 of central offce COB. When the dialed digit transfer is completed, central office COA releases connections 401 and 402 and establishes connection 403. Central office COB releases connection 404 and establishes connection 406 which connects ring generator 423 to line loop LB of the called customer B. Central office COB also establishes a connection which provides audible ringback signal 407 to customer A.

When customer B answers, current flows from the T lead to the R lead of line loop LB. When central office COB detects this current flow, it releases switching connections 406 and 408 and establishes connection 405. Thus, an analogue connection now exists between customers A and B via loop LA, switch path 403, trunk T1, switch path 405 and loop LB.

With reference to Fig. 1, voice circuit V1 provides the means for communicating analogue signals over line LA during operation in the analogue mode. Switch SW1 switches the direct current through either voice circuit V1 or digital data coupler 107. While this arrangement shows telephone SA powered directly from line LA, it is contemplated that telephone SA could be powered locally.

Current flows to both terminals A and B from the T lead to the R lead, thus signalling the analogue mode of operation to channel units CUA and CUB respectively. Communication of the operating mode information between central offices occurs using channel units CUA and CUB which encode the mode information for transmission over trunk T1. The channel units CUA and CUB are in a "local" state for this connection and connect respectively to interface units IUA and IUB. In the local state, the operating mode of each channel unit connected to a trunk T1 at an end office (originating office COA or terminating office COB) follows the operating mode of the interface units connected via the associated line loops LA or LB. To maintain this condition the channel units CUA and CUB detect the operating mode of the respective interface units IUA and IUB by determining the direction of current flow on the respective line loops LA and LB.

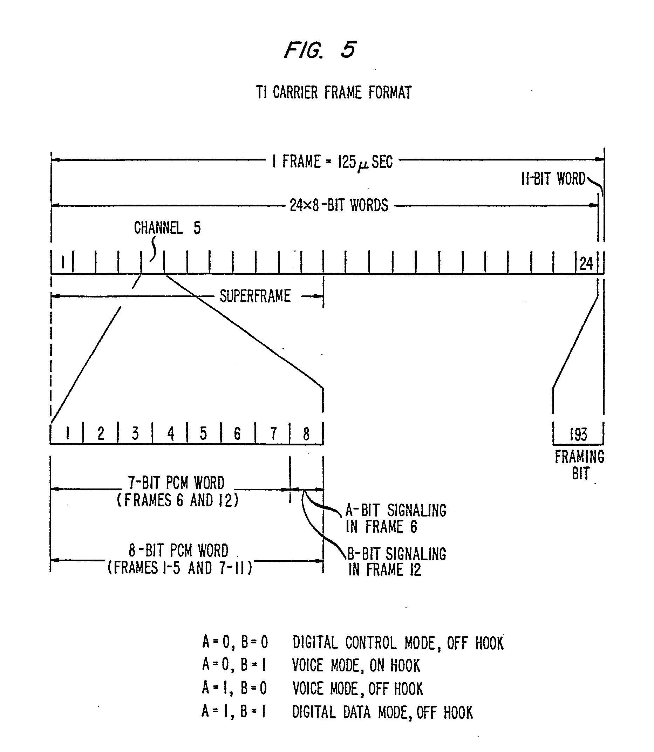

Channel units CUA and CUB inform each other of their respective operating modes by encoding bit 8 of frame 6 and 12 of the outgoing digital signal on trunk T1. With reference to the frame format shown in Fig. 5, bit 8 of frame 6 of each superframe is referred to as bit A while bit 8 of frame 12 of each superframe is referred to as bit B. There are many possible ways to encode the information regarding the operating mode. For illustrative purposes, we will use the following convention A=0, B=1 indicates an analogue-inactive status while A=1, B=0 indicates an analogue-active status. When interface IUA reflects the inactive status, common control CCA places channel unit CUA in the same status with A=0, B=1. Similarly when interface IUA is in the analogue-active status, common control CCA places channel unit CUA in the active status with A=1, B=0, and information signals from customer A are encoded in a PCM format. Since all calls are initiated in the analogue mode, the digital mode is by definition always in an active condition.

As will be discussed later a conflict exists when a channel unit (CUA) determines that the interface (IUA) is in a different mode than the channel unit (CUB) to which it is connected. During such a conflict, channel unit CUA indicates to its interface (IUA) the state of the remote interface (IUB). A channel unit determines such a conflict by comparing its own mode with the A and B bit pattern that it is receiving over trunk T1.

Channel units CUA and CUB now exchange A=1 and B=0 signals indicating the analogue-active status. In the analogue mode, relay R2 (Fig. 2) is operated by loop control 206 over lead all, and the make contacts of its transfer contacts R2-1 and R2-2 connect hybrid VH to line 201. Note, when channel units CUA and CUB are connected in a local state connection, loop control 206 controls relay R2.

Analogue signals from hybrid VH are sampled and pulse amplitude modulated (PAM) by converter A/P and transmitted as signal TPAM to common equipment CEA. Common equipment CEA converts the PAM signal into a pulse coded modulation (PCM) signal which is then modulated as one of the channels of the data stream shown in Fig. 5.

Loop status circuit 205 transmits the status of loop LA over lead SL to common control CCA. With current in line 201, reflecting the condition of loop LA through switch SWA, relay R1 of loop current monitor 200 operates, and make contact R1-1 grounds lead 203. Additionally, loop status circuit 205 receives signal TS over lead 204 when a mode transition from analogue to digital or vice versa occurs on loop LA. For either a ground on lead 203 or a TS signal on lead 204, loop status circuit 205 provides an inactive status signal over lead SL to common control CCA. Otherwise loop status circuit 205 transmits the active status signal over central lead SL to common control CCA. Control signals DS and VS from loop control circuit 206 indicate, respectively, operation at terminal A in the digital or analogue mode. Unit 207 converts signals DS and VS into a signal on lead V—D which indicates the analogue mode and causes common equipment CEA to encode the A=1, B=0 analogue-active bit pattern on trunk T1. Additionally, during the analogue mode, common equipment CEA accepts and converts PAM signals on lead TPAM into PCM form for transmission over trunk T1. Likewise it converts PCM signals on trunk T1 into PAM form for transmission over lead RPAM. A signal on lead V—D indicates operation in the digital mode to common equipment CEA. In the digital mode, digital channel bank DCBA accepts the PCM signal on lead T8B for transmission over trunk T1, and the PCM signals received from trunk T1 are outputted on lead R8B.

Analogue signals received from customer terminal B over trunk T1 are converted from PCM to PAM form and transmitted over lead RPAM by common equipment CEA. PAM to analogue converter P/A reconstructs the analogue signal for transmission through hybrid VH, line 201, and switch SWA to customer terminal A via loop LA.

Trunk control 208 monitors the bit 8 pattern received on line RB8 from common equipment CEA. Lead RB8 transmits the bit 8 (A and B bits) pattern of the data received over trunk T1. If bit 8 is a 0 or a 1 in successive appearances in one frame, the incoming bits A and B are also a 0 or 1, indicating the digital mode, and lead DT reflects a logic 1. If the bit 8 pattern is alternating (A=0, B=1, or A=1, B=0) indicating the analogue mode, lead VT reflects a binary 1.

Conflict circuit 209 includes relays R3 and R4 which indicate, respectively, analogue or digital mode conflicts. Since customer A is in the analogue mode, the signal on lead VS reflects a binary 1. If the signal on lead VT also reflects a binary 1, no conflict exists. However, if customer B is in the digital mode, the signal on lead VT reflects a binary 0, and relay R3 operates contacts R3-1 to prevent signals from customer B via unit P/A from reaching hybrid VH and customer A. Additionally, an FED tone from unit 215 is connected by the make contact R3-1 to voice hybrid VH and customer A. The FED tone alerts customer A that customer B is in the digital mode.

Note, trunk status circuit 210 also receives the bit A and B status over leads RA and RB and generates a trunk status signal ST for common control CCA.

Switching from the analogue mode to the digital mode can be initiated at either terminal, customer A or customer B. The following assumes that customer A switches to the digital mode. Referring to Fig. 1 again, the operating mode selection switch SW1 is set to digital data position D. Thus, the current flow from lead T through mode switchhook contact SH, switch SW1, diode D1, dial contact DC and voice circuit V1 to lead R is interrupted. The presence of diode D2 in the digital position path prevents current from flowing from the T lead to the R lead.

Referring to Fig. 2, when the current on loop LA is interrupted, relay R1 in monitor 200 detects the interruption and releases causing make contacts R1-1 to open and an ungrounded signal to appear on lead 203. An interruption of current is an indication to channel unit CUA that either (1) a mode change command is being sent (2) that customer A has gone on-hook or (3) that a hit has occurred on loop LA. Current monitor 200 incorporates a timer or delay 212 which waits an appropriate length of time to insure that a hit has not occurred before changing the state of relay R2. The combination of relay R1, control circuit 206 and relay R2 provides a means for alternating the connection of hybrids VH and DH which generate the opposite directions of current flow over facility LA.

In response to a current interruption signal on lead 203, which exceeds the predetermined delay 212, circuit of loop control circuit 206 releases relay R2 and starts timer 213 which causes a binary 1 signal TS on lead 204 for a timed interval. If the current on loop LA reappears before timer 213 expires, then the condition is regarded as a mode change request. However, as will be discussed later if the current on loop LA does not reappear, the inactive condition now is present at customer terminal A.

If the mode change command is present, the TS signal into loop status circuit 205 keeps an off-hook signal condition on lead SL to common control CCA. Thus, even though loop LA current is interrupted, a termination or on-hook signal condition from circuit 205 to common control CCA does not result because of the timed or delayed transition signal TS on lead 204. When relay R2 releases, the make contacts of R2-1 and R2-2 are opened, and the tip to ring current generated by the connection of voice hybrid VH to line 201 is terminated. A connection is established between digital hybrid DH and line 201 via the break contacts of R2-1 and R2-2. Relay R2 provides a means for connecting either the voice hybrid VH or the digital hybrid DH to loop LA. Relay R2 is operated by control signal 211 which is produced by control circuit 206. When digital hybrid DH is connected, a negative voltage −V is applied to the T lead, and a ground potential is applied to the R lead of line 201. The connection of digital hybrid DH to loop facility LA enables a current flow from the R lead to the T lead of loop LA.

Thus, referring again to Fig. 1, loop LA has −V on its T lead and ground on its R lead. A current flow exists from lead R through coupler 107, diode D2 and make contact M of switchhook SH to lead T. This direction of loop current flow at subscriber interface IUA signals operation in the digital mode. Since no current flows through voice circuit V1, telephone set SA is inoperative. Data unit DA, however, is now connected to loop LA via receive circuit 105 and send circuit 106 in coupler 107.

Referring to Fig. 2, the resumption of current flow over loop LA and hence line 201 activates relay R1 of current monitor 200. Make contact R1-1 operates and transmits a continued off-hook status signal on lead SL from loop status circuit 205 to common control CCA. The ground on lead 203 through make contact R1-1 also permits loop control 206 to transmit a binary 1 signal on lead DS and a binary 0 signal on lead VS Timer 213 of loop control 206 is also restored by the ground on lead 203, and consequently signal TS on lead 204 becomes a binary 0. Loop control 206 signals common control CCA via the binary 1 on lead DS that a digital mode has been established by customer A.

At channel unit CUB, a conflict circuit equivalent to circuit 209 of channel unit CUA detects that customer B is in the analogue mode (VS is logic 1) and customer A is in the digital mode (VT is logic 0). Consequently, conflict relay R3 of channel unit CUB operates causing an FED tone to be transmitted via contacts R3-1 to customer B. Customer B receives the FED tone over the receiver of its handset (equivalent of HA of telephone set SA of Fig. 1). Customer B then switches to the digital mode.

Digital hybrid DH of channel unit CUA then sends FEV (far end voice) characters to interface IUA. An FEV character is sent to customer A via contacts R4-1 when relay R4 of conflict circuit 209 operates upon receipt of a binary 1 on lead DS, while a binary 0 appears on lead DT. Lead DS now carries a binary 1 signal since customer A has switched to the digital mode and lead DT carries a binary 0 since customer B is still in the analogue mode. Referring to Fig. 1 again, the FEV signal is received from coupler 107 by FEV detector 108. Detector 108 causes lamp 109 or other indicator to turn on indicating that customer B is in the analogue mode. To remove this conflict situation, customer A can wait a few moments for customer B to switch to the digital mode or can return to the analogue mode. Assuming that customer B switches to the digital mode, the operation corresponding to that previously described operation for customer A would be repeated at customer B interface IUB and at channel unit CUB. Bidirectional digital communications between customers A and B now can begin.

Current monitor 200 of channel unit CUA continuously monitors current flow over loop LA. The direction of current flow on loop LA gives a continuous indication of the operating mode of customer A. Likewise, the direction of current flow over loop LB gives channel unit CUB a continuous indication of the operating mode of customer B. Channel unit CUA also knows the operating mode of customer B by virtue of the continuous pattern of signalling bits A and B received from channel unit CUB and visa versa. Thus, the operating mode status of both customer A and customer B is constantly available from the above signal conditions on loop LA, loop LB and carrier facility T1.

With reference again to Fig. 1, assume that customer A desires to terminate communication in the digital mode. Make contact M of switchhook SH is opened preventing current flow in loop LA. Break contact B of switchhook SH closes connecting ringer R1 across leads T and R. Ringer R1 does not conduct direct current, and hence no current flows in loop LA at this time.

With reference to Fig. 2, relay R1 is released by the interruption of current flow. When make contact R1-1 opens, timer 231 in loop control circuit 206 generates a transition signl TS on lead 204 to enable loop status circuit 205 to temporarily maintain an off-hook signal SL at common control CCA. Loop control circuit 206 operates relay R2 which disconnects digital hybrid DH and reconnects voice hybrid VH resulting in a battery reversal across the T and R leads of line 201 and hence loop LA. Since telephone set SA is now on-hook current flow remains interrupted on loop LA. After a current interruption on loop LA lasting a predetermined period of time, timer 213 of loop control circuit 206 times out and transition signal TS disappears from line 204. Loop status circuit 205 now transmits a mode terminating on-hook signal to common control CCA since lead 203 is not grounded. Common control CCA in turn causes an analogue on-hook condition (bit A=0, B=1) to be sent from channel unit CUA to channel unit CUB. Referring to Fig. 4, the bit A=0, B=1 condition causes central office COA and central office COB to disconnect existing switching connections 403 and 405 respectively, thus terminating the connection between customers A and B. Channel unit CUA reverts to the voice mode when it is idle (on-hook).

Assuming that a digital connection exists between customers A and B either one can initiate a return to the analogue mode. Assuming that customer A initiates the change, switch SW1 of interface IUA is moved to position V thereby interrupting current flow through loop LA from the R lead through coupler 107, diode D2, and switch SW1, make contact M to the T lead.

Current monitor 200 detects the loop current interruption and releases relay R1. Timer 213 of loop control circuit 206 transmits signal TS to loop status circuit 205 which maintains the off-hook signal SL at common control CCA. Loop control circuit 206 also operates relay R2 to disconnect data hybrid DH and connect voice hybrid VH, causing a battery reversal on loop LA via line 201 and switch SWA. When current flow resumes on loop LA, the flow is from lead T to lead R. Relay R1 operates and resets timer 213 of loop control circuit 206 via make contacts R1-1. Make contacts R1-1 place ground on line 203 which enables loop status circuit 205 to maintain an off-hook signal at common control CCA. Loop control circuit 206 provides a binary 1 signal on lead VS and a binary 0 signal on lead DS signifying the analogue mode for customer A.

Common control CCA receives signals on leads DS and VS and causes the voice mode A=1, B=0 bit pattern to be generated by common equipment CEA. Conflict circuit 209 receives the binary 1 signal on lead VS and releases relay R3 if a binary 1 signal exists on lead VT. A binary 1 signal would exist on lead VT only if customer B has switched to the analogue mode and hence a A=1, B=0 bit 8 pattern is received on lead RB8 from customer B.

If customer B has not switched to the analogue mode, lead VT carries a binary 0 signal and relay R3 of conflict circuit 205 is operated. Consequently, make contacts R3-1 permit a far end digital tone to be transmitted through hybrid VH to customer A. When customer B switches to the analogue mode, relay R3 releases and make contacts R3-1 transmit the signals received from customer B, via lead RPAM and converter P/A, to customer A.

At channel unit CUB (not shown), the transition of customer A from digital to analogue mode results in a far end voice (FEV) control mode character being sent to customer B until customer B changes to the analogue mode. This character is provided because channel unit CUB is in the digital mode while channel unit CUA is in the analogue mode. At interface IUB, the FEV character results in a visual signal to customer B. When customer B switches to the analogue mode, the transition sequence of events previously described for customer A occurs in the corresponding interface unit IUB and channel unit CUB of customer B.

After customer B has made the transition from digital to analogue mode, channel units CUA and CUB signal respectively customers A and B indicating that an analog connection is complete. Note that equalization or balancing of the analogue hybrids is not required on transitions to the analogue mode.

During operation in the analogue mode, the direction of current flow from T lead to R lead in loop LA gives channel unit CUA a continuous indication of the operating status of customer A via interface IUA. Channel unit CUA also knows the operating mode status of customer B by virtue of the continuous pattern of signalling bits A=1, B=0 received over trunk T1 from channel unit CUB. In a similar manner, channel unit CUB has a continuous status indication of customer B and customer A.

**Claims**

1. A communication system comprising a central office (COA) and a plurality of line terminals (SA, DA, IUA: . . . SX, DX, IUX) connected therewith over respective two wire lines (LA . . . LX) for transmission of information using selectively either one of two modes of transmission, the central office (COA) having first switch means (R2) for connecting a direct current source (−V) to the two wire lines such that a direct current flows round a loop formed in a two wire line associated with an active line terminal, at least one line terminal comprising a mode changeover switch (SW1) for signalling a change in transmission mode, characterized in that:

direct current flow in one direction around a two wire line loop indicates one mode of transmission, and direct current flow in the reverse direction indicates the other mode of transmission;

operation of said mode changeover switch during either mode of transmission causes an interruption in the direct current flow in the line loop, the central office includes control means (206) which respond to an interruption of direct current flow in a two wire line loop to cause the first switch means (R2) to reverse the polarity with which the direct current source is connected to the two wire line, the presence of a direct current flow in the line loop following a polarity reversal indicating that the associated line terminal has changed transmission modes.

2. A communication system in accordance with claim 1, characterized in that:

control means (206) respond to an interruption of direct current flow of a predetermined duration to terminate an established connection between the central office (COA) and the line terminal (SA).

3. A communication system in accordance with claim 1, characterized in that:

conflict circuitry (209) compares transmission mode of interconnected line terminals (SA, SB), and

tone circuitry (215) responds to a signal from the conflict circuitry indicating the presence of different modes at the respective terminals by sending a conflict signal to one of the terminals.

4. A method of signalling a change in the mode of transmission of information via two wire lines (LA ... LX) connected between a central office (COA) and respective line terminals (SA, DA, IUA ... SX, DX, IUX) of a communication system and for distinguishing the mode identity from the line terminal condition, characterized in that:

the method comprises the steps of transmitting direct current in one direction around a two wire line loop indicating one mode of transmission,

interrupting the current flow at a line terminal to indicate a change in the communication mode, and

transmitting the direct current in the opposite direction around the two wire line loop in response to the interruption indicating the other mode of transmission.

## Revendications

1. Un système de télécommunication comprenant un central téléphonique (COA) et un ensemble de terminaux de ligne (SA, DA, IUA; ... SX, DX, IUX) connectés au central par l'intermédiaire de lignes bifilaires respectives (LA ... LX), pour la transmission d'information par l'utilisation sélective de l'une ou de l'autre de deux modes de transmission, le central téléphonique (COA) comportant des premiers moyens de commutation (R2) destinés à connecter une source de courant continu (−V) aux lignes bifilaires de façon qu'un courant continu circule dans une boucle formée dans une ligne bifilaire associée à un terminal de ligne actif, et au moins un terminal de ligne comprenant un commutateur de changement de mode (SW1) destiné à signaler un changement du mode de transmission, caracterise en ce que:

la circulation d'un courant continu dans une direction dans une boucle de ligne bifilaire indique un mode de transmission, et la circulation d'un courant continu dans la direction inverse indique l'autre mode de transmission;

la manoeuvre du commutateur de changement de mode au cours de l'un ou l'autre des modes de transmission provoque une interruption de la circulation du courant continu dans la boucle de ligne; le central téléphonique comprend des moyens de commande (206) qui réagissent à une interruption de la circulation du courant continu dans une boucle de ligne bifilaire en agissant sur les premiers moyens de commutation (R2) de façon qu'ils inversent la polarité avec laquelle la source de courant continu est connectée à la ligne bifilaire, la présence d'un courant continu circulant dans la boucle de ligne à la suite d'une inversion de polarité indiquant que le terminal de ligne associé a changé de mode de transmission.

2. Un système de télécommunication selon la revendication 1, caracterise en ce que:

les moyens de commande (206) réagissant à une interruption de la circulation du courant continu pendant une durée prédéterminée en mettant fin à une connexion établie entre le central téléphonique (COA) et le terminal de ligne (SA).

3. Un système de télécommunication selon la revendication 1, caracterise en ce que:

un circuit de conflit (209) compare le mode de transmission de terminaux de ligne inter- connectés (SA, SB), et

un circuit générateur de tonalité (215) réagit à un signal provenant du circuit de conflit et indiquant la présence de modes différents dans les terminaux respectifs, en émettant un signal de conflit vers l'un des terminaux.

4. Un procédé pour signaler un changement du mode de transmission d'information par l'intermédiaire de lignes bifilaires (LA ... LX) connectées entre un central téléphonique (COA) et des terminaux de ligne respectifs (SA, DA, IUA ... SX, DX, IUX) d'un système de télécommunication, et pour déterminer l'identité du mode à partir de la condition d'un terminal de ligne, caracterise en ce que:

le procédé comprend les opérations consistant à émettre un courant continu dans une direction dans une boucle de ligne bifilaire, pour indiquer un mode de transmission,

à interrompre la circulation du courant au niveau d'un terminal de ligne pour indiquer un changement du mode de transmission, et

à émettre le courant continu dans la direction opposée dans la boucle de ligne bifilaire, sous l'effet de l'interruption, pour indiquer l'autre mode de transmission.

**Patentansprüche**

1. Fernmeldeanlage mit einem Zentralamt (COA) und einer Vielzahl von Leitungsanschlüssen (SA, DA, IUA ... SX, DX, IUX), die mit dem Zentralamt über jeweils zweiadrige Leitungen (LA ... LX) zur übertragung von Informationen unter wahlweiser Verwendung einer von zwei Übertragungsarten verbunden sind, wobei das Zentralamt (COA) eine erste Schalteinrichtung (R2) aufweist, die eine Gleichstromquelle (−V) an die zweiadrige Leitung so anschaltet, daß ein Gleichstrom über eine Schleife fließt, die durch eine einem aktiven Leitungsanschluß zugeordnete zweiadrige Leitung gebildet wird, und wobei wenigstens ein Leitungsanschluß einen Betriebsartenänderungsschalter (SW1) zur Anzeige einer Betriebsartenänderung aufweist, dadurch gekennzeichnet,

daß ein Gleichstromfluß auf einer zweiadrigen Leitungsschleife in einer Richtung die eine Betriebsart und in der entgegengesetzten Richtung die andere Betriebsart anzeigt, daß eine Betätigung des Betriebsartenänderungschalters während einer der Betriebsarten eine Unterbrechung des Gleichstromflusses auf der Leitungsschleife bewirkt, daß das Zentralamt eine Steuereinrichtung (206) aufweist, die unter Ansprechen auf eine Unterbrechung des Gleichstromflusses auf einer zweiadrigen Leitungsschleife die erste Schalteinrichtung (R2) veranlaßt, die Polarität, mit der die Gleichstromquelle an die zweiadrige Leitung angeschaltet ist, umzukehren, und daß das Vorhandensein eines Gleichstromflusses auf der Leitungsschleife nach einer Polaritätsumkehr anzeigt, daß der zugeordnete Leitungsanschluß die Übertragungsart geändert hat.

2. Fernmeldeanlage nach Anspruch 1, dadurch gekennzeichnet, daß die Steuereinrichtung (206) unter Ansprechen auf eine Unterbrechung des Gleichstromflusses für eine vorbestimmte Dauer eine aufgebaute Verbindung zwischen dem Zentralamt (COA) und dem Leitungsanschluß (SA) unterbricht.

3. Fernmeldeanlage nach Anspruch 1, dadurch gekennzeichnet, daß eine Konfliktschaltung (209) den Betriebszustand miteinander verbundener Leitungsanschlüsse (SA, SB) vergleicht und daß eine Tonschaltung (215) unter Ansprechen auf ein Signal von der Konfliktschaltung, das das Vorhandensein unterschiedlicher Betriebsarten bei den Leitungsanschlüssen anzeigt, ein Konfliktsignal an einen der Leitungsanschlüsse sendet.

4. Verfahren zur Anzeige einer Änderung bei der Übertragungsart von Informationen über zweiadrige Leitungen (LA ... LX) zwischen einem Zentralamt (COA) und entsprechenden Leitungsanschlüssen (SA, DA, IUA ... SX, DX, IUX) einer Fernmeldeanlage und zur Unterscheidung der Betriebsartenidentität vom Leitungsanschlußzustand, dadurch gekennzeichnet, daß das Verfahren folgende Schritte aufweist:

Übertragen von Gleichstrom in einer Richtung über eine zweiadrige Leitungsschleife, wodurch eine Betriebsart angezeigt wird,

Unterbrechen des Stromflusses an einem Leitungsanschluß, um eine Änderung der Übertragungsart anzuzeigen, und

Übertragen des Gleichstroms in entgegengesetzter Richtung über die zweiadrige Leitungsschleife unter Ansprechen auf die Unterbrechung, wodurch die andere Betriebsart angezeigt wird.

*FIG. 3*

| FIG. 1 | FIG. 2 |
|--------|--------|

*FIG. 1*

FIG. 2

0 088 786

FIG. 4

# FIG. 5

## TI CARRIER FRAME FORMAT

| A = 0, B = 0 | DIGITAL CONTROL MODE, OFF HOOK |
| A = 0, B = 1 | VOICE MODE, ON HOOK |
| A = 1, B = 0 | VOICE MODE, OFF HOOK |
| A = 1, B = 1 | DIGITAL DATA MODE, OFF HOOK |